(19) Europäisches Patentamt
European Patent Office
Office européen des brevets

(11) **EP 4 358 031 A1**

(12) **EUROPEAN PATENT APPLICATION**

(43) Date of publication:
**24.04.2024   Bulletin 2024/17**

(21) Application number: **22306583.0**

(22) Date of filing: **19.10.2022**

(51) International Patent Classification (IPC):
**G06V 10/143** (2022.01)   **G06V 10/58** (2022.01)
**G06V 10/82** (2022.01)   **G06V 20/13** (2022.01)
**G06V 20/17** (2022.01)   **G06V 20/10** (2022.01)
**G06V 20/60** (2022.01)

(52) Cooperative Patent Classification (CPC):
**G06V 20/188; G06F 18/214; G06V 10/143;
G06V 10/58; G06V 10/774; G06V 10/82;
G06V 20/13; G06V 20/17; G06V 20/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOTALENERGIES ONETECH
92400 Courbevoie (FR)**

(72) Inventors:
• **ALBERGEL, Simon
92400 COURBEVOIE (FR)**
• **LE BORGNE, Emmanuel
92400 COURBEVOIE (FR)**
• **MKADMI, Lamiae
92400 COURBEVOIE (FR)**

(74) Representative: **Lavoix
2, place d'Estienne d'Orves
75441 Paris Cedex 09 (FR)**

(54)   **A METHOD FOR DETERMINING THE HEALTH STATUS OF VEGETAL ELEMENTS**

(57)   The invention relates to a method for determining the health status of vegetal elements. The method comprises:
- a phase of building a training database by associating, for each zone of space, input data indicative of the position and health status of target vegetal elements for said zone of space and a concatenation of computed multispectral indexes for said zone of space,

- a phase of training a detection model on the basis of the training database so as to obtain a trained detection model configured for determining the position and health status of target vegetal elements in a zone of space as a function of a set of multispectral images of the zone of space, and
- a phase of operating the trained detection model.

FIG.1

**Description**

TECHNICAL FIELD OF THE INVENTION

The present invention concerns a method for determining the health status of vegetal elements. The present invention also concerns an associated computer program product. The present invention also relates to an associated readable information carrier.

BACKGROUND OF THE INVENTION

Bark beetle is a coleopteran insect that can devastate spruce forests. Due to global warming bark beetles survive the winter and proliferate. As a consequence, some regions, such as the east of France, are highly infested since 2018.

Once a forest is invested, to prevent the spread of the disease, the solution is to cut down infested trees.

However, this has an environmental impact. In addition, the affected communities may see their forestry revenues decrease.

It appears crucial to identify as soon as possible the infected trees to avoid cutting a too huge amount of them. However, such a work is very time consuming. In addition, the signs of the illness are not easy to identify visually.

SUMMARY OF THE INVENTION

Hence, there exists a need for a method enabling to determine the health status of a vegetal element, such a tree, in a more easy and precise way.

To this end, the invention relates to a method for determining the health status of vegetal elements, such as trees or plants, the method comprising the following phases which are computer-implemented:

- a phase of building a training database comprising the following steps:

  • collecting input data indicative of the position and health status of target vegetal elements in a plurality of zones of space,
  • for each zone of space, collecting a set of multispectral images seen from the sky of the zone of space as a function of the position of the target vegetal elements in the input data, the set of multispectral images having been acquired by a multispectral camera,
  • processing each set of multispectral images so as to compute multispectral indexes characterizing the target vegetal elements of the set of multispectral images,
  • building the training database by associating, for each zone of space, the input data for said zone of space and a concatenation of the computed multispectral indexes for said zone of space

- a phase of training a detection model on the basis of the training database so as to obtain a trained detection model configured for determining the position and health status of target vegetal elements in a zone of space as a function of a set of multispectral images of the zone of space, and
- a phase of operating the trained detection model comprising the following steps:

  • receiving a set of multispectral images seen from the sky of a zone of space, and
  • determining, by the trained detection model, the position and health status of eventual target vegetal elements in the zone of space.

The method according to the invention may comprise one or more of the following features considered alone or in any combination that is technically possible:

- at least one multispectral index is computed using at least one multispectral image of the corresponding set that is in the near infrared;
- at least two computed multispectral indexes are chosen in the following list: the Red Green Blue Index, the Normalized Difference Vegetation Index, the Advanced Vegetation Index and the Normalized Difference Moisture Index;
- at least four multispectral indexes are computed which are the following indexes: the Red Green Blue Index, the Normalized Difference Vegetation Index, the Advanced Vegetation Index and the Normalized Difference Moisture Index;
- the input data comprise at least one visual support, such as a cartography or an image, on which the position of the target vegetal elements are georeferenced;
- the target vegetal elements are modeled by geometrical forms, such as polygons, georeferenced on the visual support;
- the reference frame of the multispectral images is different from the reference frame of the visual support, the step of building the training database comprising processing the coordinates of the geometrical forms modeling the target vegetal elements in the reference frame of the visual support so as to be compatible with the coordinate frame of the multispectral images, the training database comprising the processed coordinates of the geometrical forms;
- the multispectral images are satellite images;
- the detection model is a convolutional neural network;
- the detection model has been pretrained on a database different from the training database so as to achieve transfer learning;
- the trained detection model associates a confidence metric relative to the position and/or health status of each target vegetal element determined by said trained detection model;

- determining the health status of a vegetal element implies determining whether or not the vegetal element has a disease, preferably the disease being a specific disease induced by an insect, such as the bark beetle;
- the method comprises a phase of displaying, on a display, the position and health status of the target vegetal elements which have been determined by the trained detection model, the position and health status being for example displayed on a visual support, such as an image or a cartography of the corresponding zone of space.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a computer for implementing a method for determining the health status of vegetal elements,
- Figure 2 is a schematic representation illustrating the implementation of phases of a method for determining the health status of vegetal elements,
- Figure 3 is a schematic representation of an example of input data, and
- Figure 4 is a schematic representation of an example of a set of multispectral images being processed to obtain spectral indexes, the spectral indexes being concatenated to be integrated in a training database.

DETAILED DESCRIPTION OF SOME EMBODIMENTS

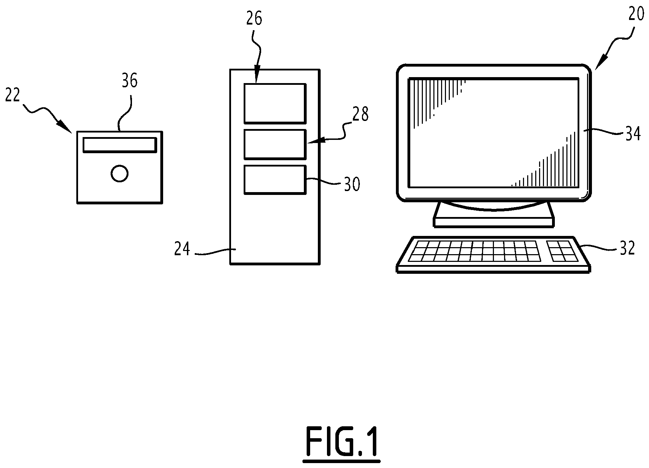

A computer 20 and a computer program product 22 are illustrated in figure 1.

The computer 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

As illustrated on figure 1, the calculator 20 comprises a processor 24 comprising a data processing unit 26, memories 28 and a reader 30 for information media. In the example illustrated on figure 1, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining the health status of vegetal elements, when the computer program 22 is loaded on the processing unit 26 of the calculator 20.

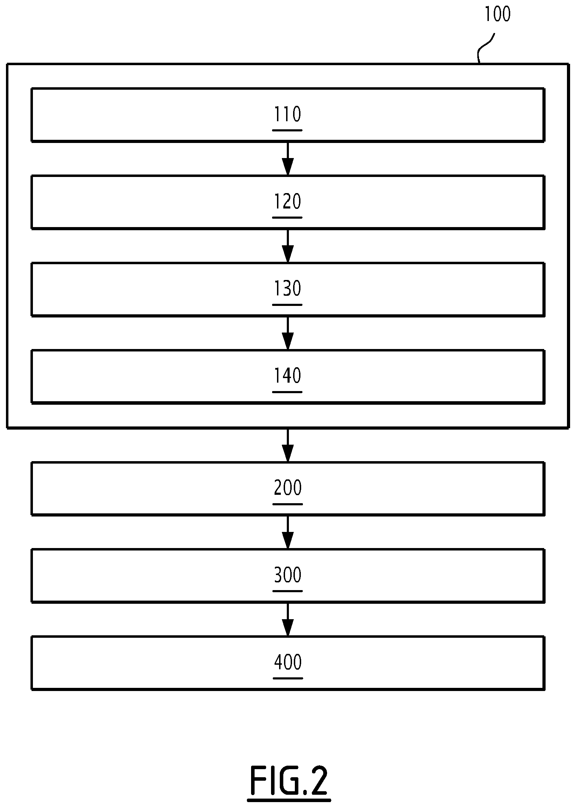

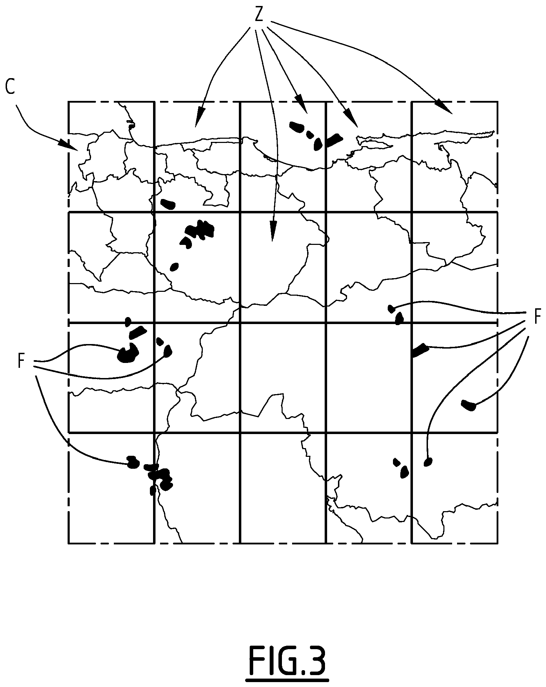

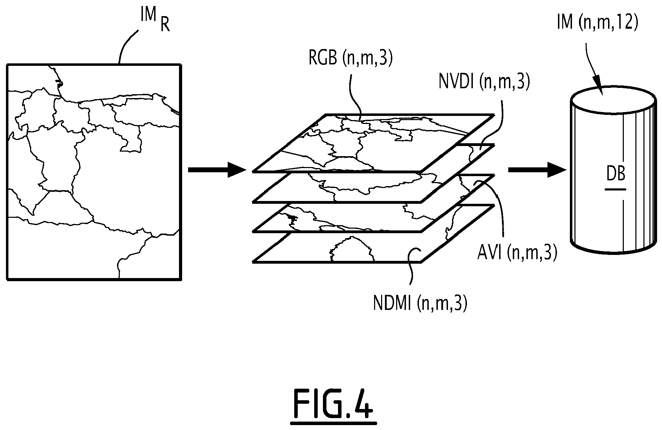

A method for determining the health status of vegetal elements will now be described with reference to the organigram of figure 2, and to figures 3 and 4, which illustrate examples of some phases of this method.

The determination method comprises a phase 100 of building a training database DB. The building phase 100 is, for example, implemented by the calculator 20 interacting with the computer program product 22, that is to say is computer-implemented.

The building phase 100 comprises a step 110 for collecting input data indicative of the position and health status of target vegetal elements in a plurality of zones of space Z.

The vegetal elements are for example trees or plants.

The positions are for example given by geographical coordinates.

The health status indicates the health condition of the vegetal element. In an example, the health status indicates whether or not the vegetal element has a disease. The disease is for example induced by an insect, such as the bark beetle.

Preferably, the input data comprise at least one visual support on which the position of the target vegetal elements are georeferenced for each zone of space Z. The target vegetal elements are for example modeled by geometrical forms F, such as polygons, georeferenced on the visual support. The visual support is for example an image (seen from the sky of the zones of space) or a cartography.

In particular, in the example of figure 3, the visual support is a cartography C. The zones of space Z are defined by rectangle of a grid dividing the cartography C (only four zones Z are referenced on figure 3 in order not to overload the figure). In this example, the health status indicates whether or not the vegetal elements are ill and all the target vegetal elements are considered ill (the vegetal elements in good health condition are not taken into account).

It should be noted that the different zones of space Z taken into account in the building phase 100 could be adjacent zones or zones of space coming from different regions or lands (in this case a plurality of visual support can be needed).

The building phase 100 comprises a step 120 of collecting a set of multispectral images seen from the sky for each zone of space Z. For each zone of space Z, the set of multispectral images are obtained on the basis of the positions of the target vegetal elements in the input data (in order to get images of the target vegetal elements).

The multispectral images are images within different wavelength ranges across the electromagnetic spectrum. Preferably, the set of multispectral images for each zone of space Z comprises at least images in the visible range (400 nanometers (nm) to 700 nm) and in the near-infrared (700 nm to 3 micrometer ($\mu$m)).

The multispectral images have been acquired by a multispectral camera.

For example, the multispectral camera is mounted on a satellite and the multispectral images are satellite images. For example, the multispectral images have been obtained by the satellite Sentinel-2A.

In a variant, the multispectral camera is mounted on an aircraft, for example a drone.

The building phase 100 comprises a step 130 of processing each set of multispectral images so as to compute multispectral indexes characterizing the target vegetal elements of the set of multispectral images. The multispectral indexes are obtained by combining the different multispectral images of the set.

Preferably, at least one multispectral index is computed using at least one multispectral image of the corresponding set that is in the near infrared.

Preferably, at least two computed multispectral indexes are chosen in the following list: the Red Green Blue Index (RGB), the Normalized Difference Vegetation Index (NDVI), the Advanced Vegetation Index (AVI) and the Normalized Difference Moisture Index (NDMI). In particular, the NDVI is calculated as being the ratio $\frac{MIR-NIR}{MIR+NIR}$ where MIR=[1300:3000] (ie the range of wavelengths extending from 1300 nm to 3000 nm), NIR=[779:885] (ie the range of wavelengths extending from 779 nm to 885 nm). The AVI is calculated with the following formula 2.0[800:1100]-[600:700]. The NDMI is calculated with the following formula: $\frac{820\,nm-1600\,nm}{820\,nm+1600\,nm}$.

Preferably, at least four multispectral indexes are computed which are the following indexes: RGB, NDVI, AVI and NDMI.

The building phase 100 comprises a step 140 of building the training database DB by associating, for each zone of space Z, the input data for said zone of space Z and a concatenation of the computed multispectral indexes for said zone of space Z.

In particular, figure 4 illustrates an image $IM_R$ corresponding to a raster of the different multispectral images. The spectral indexes are then calculated. Finally, the spectral indexes are concatenated to obtain an image IM(n,m,12) into higher dimension array.

In an example of implementation, the reference frame of the multispectral images is different from the reference frame of the visual support (cartography C or equivalent image) of the input data. The coordinates of the geometrical forms F modeling the target vegetal elements in the reference frame of the visual support are thus processed so as to be compatible with the coordinate frame of the multispectral images. The training database DB is filled with the processed coordinates of the geometrical forms F. This enables the geometrical forms F to be stackable on the multispectral images without error for ground truth evaluation.

The determination method comprises a phase 200 of training a detection model M on the basis of the training database DB so as to obtain a trained detection model M'. The training phase 200 is, for example, implemented by the calculator 20 interacting with the computer program product 22, that is to say is computer-implemented.

The trained detection model M' is configured for determining the position and health status of target vegetal elements in a zone of space Z as a function of a set of multispectral images of the zone of space Z.

The detection model M is a deepl learning model.

Preferably, the detection model M is convolutional neural network (CNN).

Preferably, the detection model M has been pretrained on a database different from the training database DB so as to achieve transfer learning.

The training technique is typically based on supervised learning, with training and validation substeps (performed by dividing the training database DB, for example 80% of the data for the training substep and 20% of the data for the validation substep).

In an example, the detection model M is a mask Region-based Convolutional Neural Netwotk (mask RCNN) with a Feature Pyramid Network (FPN) as backbone. The detection model M is for example obtained from the Facebook AI computer vision tool Detectron 2.

Preferably, the trained detection model M' associates a confidence metric relative to the position and/or health status of each target vegetal element determined by said trained detection model M'.

The determination method comprises a phase 300 of operating the trained detection model M'. The operating phase 300 is, for example, implemented by the calculator 20 interacting with the computer program product 22, that is to say is computer-implemented.

The operating phase 300 comprises the following steps:

- receiving a set of multispectral images seen from the sky of a zone of space Z, and
- determining, by the trained detection model M', the position and health status of eventual target vegetal elements in the zone of space Z.

Preferably, the determination method also comprises a phase 400 of displaying, on a display (for example the display 34 of the calculator 20), the position and health status of the target vegetal elements which have been determined by the trained detection model M'. The position and health status are for example displayed on a visual support, such as an image (such as the image $IM_R$ of figure 4) or a cartography of the corresponding zone of space Z.

The above method has been implemented and enables to obtain fast and good predictions, which offers the possibility of frequent scoring for health monitoring of vegetal elements. In particular, the use of concatenate spectral indexes obtained on the basis of multispectral images enables to determine in a more precise way the health status of a vegetal element as compared to the state of the art.

The person skilled in the art will understand that the embodiments and variants described above can be combined to form new embodiments provided that they are technically compatible.

**Claims**

1. - A method for determining the health status of vegetal elements, such as trees or plants, the method comprising the following phases which are computer-implemented:

    - a phase of building a training database (DB) comprising the following steps:

        • collecting input data indicative of the position and health status of target vegetal elements in a plurality of zones of space (Z),
        • for each zone of space (Z), collecting a set of multispectral images seen from the sky of the zone of space (Z) as a function of the position of the target vegetal elements in the input data, the set of multispectral images having been acquired by a multispectral camera,
        • processing each set of multispectral images so as to compute multispectral indexes characterizing the target vegetal elements of the set of multispectral images,
        • building the training database (DB) by associating, for each zone of space (Z), the input data for said zone of space (Z) and a concatenation of the computed multispectral indexes for said zone of space (Z),

    - a phase of training a detection model (M) on the basis of the training database (DB) so as to obtain a trained detection model (M') configured for determining the position and health status of target vegetal elements in a zone of space (Z) as a function of a set of multispectral images of the zone of space (Z), and
    - a phase of operating the trained detection model (M') comprising the following steps:

        • receiving a set of multispectral images seen from the sky of a zone of space (Z), and
        • determining, by the trained detection model (M'), the position and health status of eventual target vegetal elements in the zone of space (Z).

2. - A method according to claim 1, wherein at least one multispectral index is computed using at least one multispectral image of the corresponding set that is in the near infrared.

3. - A method according to claim 1 or 2, wherein at least two computed multispectral indexes are chosen in the following list: the Red Green Blue Index, the Normalized Difference Vegetation Index, the Advanced Vegetation Index and the Normalized Difference Moisture Index.

4. - A method according to claim 1 or 2, wherein at least four multispectral indexes are computed which are the following indexes: the Red Green Blue Index, the Normalized Difference Vegetation Index, the Advanced Vegetation Index and the Normalized Difference Moisture Index.

5. - A method according to any one of claims 1 to 4, wherein the input data comprise at least one visual support, such as a cartography (C) or an image, on which the position of the target vegetal elements are georeferenced.

6. - A method according to claim 5, wherein the target vegetal elements are modeled by geometrical forms (F), such as polygons, georeferenced on the visual support.

7. A method according to claim 6, wherein the reference frame of the multispectral images is different from the reference frame of the visual support, the step of building the training database (DB) comprising processing the coordinates of the geometrical forms (F) modeling the target vegetal elements in the reference frame of the visual support so as to be compatible with the coordinate frame of the multispectral images, the training database (DB) comprising the processed coordinates of the geometrical forms (F).

8. - A method according to any one of claims 1 to 7, wherein the multispectral images are satellite images.

9. - A method according to any one of claims 1 to 8, wherein the detection model (M) is a convolutional neural network.

10. - A method according to any one of claims 1 to 9, wherein the detection model (M) has been pretrained on a database different from the training database (DB) so as to achieve transfer learning.

11. - A method according to any one of claims 1 to 10, wherein the trained detection model (M') associates a confidence metric relative to the position and/or health status of each target vegetal element determined by said trained detection model (M').

12. - A method according to any one of claims 1 to 11, wherein determining the health status of a vegetal element implies determining whether or not the vegetal element has a disease, preferably the disease being a specific disease induced by an insect, such as the bark beetle.

13. - A method according to any one of claims 1 to 12, wherein the method comprises a phase of displaying, on a display, the position and health status of the target vegetal elements which have been determined by the trained detection model (M'), the position and health status being for example displayed on a visual support, such as an image or a cartography of the corresponding zone of space (Z).

14. - A computer program product comprising a readable information carrier having stored thereon a computer program comprising program instructions, the computer program being loadable onto a data processing unit and causing a method according to any one of claims 1 to 13 to be carried out when the computer program is carried out on the data processing unit.

15. - A readable information carrier on which a computer program product according to claim 14 is stored.

FIG.1

100

```
┌──────────────────────────────────────────────────┐
│  ┌──────────────────────────────────────────────┐  │
│  │                    110                       │  │
│  └──────────────────────────────────────────────┘  │
│                     │                              │
│                     ▼                              │
│  ┌──────────────────────────────────────────────┐  │
│  │                    120                       │  │
│  └──────────────────────────────────────────────┘  │
│                     │                              │
│                     ▼                              │
│  ┌──────────────────────────────────────────────┐  │
│  │                    130                       │  │
│  └──────────────────────────────────────────────┘  │
│                     │                              │
│                     ▼                              │
│  ┌──────────────────────────────────────────────┐  │
│  │                    140                       │  │
│  └──────────────────────────────────────────────┘  │
└──────────────────────────────────────────────────┘
                      │
                      ▼
   ┌──────────────────────────────────────────────┐
   │                    200                       │
   └──────────────────────────────────────────────┘
                      │
                      ▼
   ┌──────────────────────────────────────────────┐
   │                    300                       │
   └──────────────────────────────────────────────┘
                      │
                      ▼
   ┌──────────────────────────────────────────────┐
   │                    400                       │
   └──────────────────────────────────────────────┘
```

## FIG.2

FIG.3

$IM_R$

RGB (n,m,3)

NVDI (n,m,3)

IM (n,m,12)

DB

AVI (n,m,3)

NDMI (n,m,3)

# FIG.4

Europäisches
Patentamt

European
Patent Office

Office européen
des brevets

# EUROPEAN SEARCH REPORT

Application Number

EP 22 30 6583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG JINGZONG ET AL: "Detecting Pest-Infested Forest Damage through Multispectral Satellite Imagery and Improved UNet++", SENSORS, vol. 22, no. 19, 30 September 2022 (2022-09-30), page 7440, XP093034527, DOI: 10.3390/s22197440 * sections 1-4; page 1 – page 16 * | 1-15 | INV. G06V10/143 G06V10/58 G06V10/82 G06V20/13 G06V20/17 G06V20/10 G06V20/60 |
| X | PARK HAE GWANG ET AL: "Multichannel Object Detection for Detecting Suspected Trees With Pine Wilt Disease Using Multispectral Drone Imagery", IEEE JOURNAL OF SELECTED TOPICS IN APPLIED EARTH OBSERVATIONS AND REMOTE SENSING, IEEE, USA, vol. 14, 4 August 2021 (2021-08-04), pages 8350-8358, XP011876307, ISSN: 1939-1404, DOI: 10.1109/JSTARS.2021.3102218 [retrieved on 2021-09-01] * sections I-III; page 8350 – page 8356 * | 1-15 | |
| X | SE 544 695 C2 (EARTHBANC AB [SE]) 18 October 2022 (2022-10-18) * paragraph [0007] – paragraph [0050] * * paragraph [0063] – paragraph [0087] * | 1-15 | TECHNICAL FIELDS SEARCHED (IPC) G06V |

The present search report has been drawn up for all claims

| Place of search | Date of completion of the search | Examiner |
|---|---|---|
| The Hague | 24 March 2023 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 30 6583**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-03-2023**

| Patent document cited in search report | Publication date | Patent family member(s) | Publication date |
|---|---|---|---|
| SE 544695 C2 | 18-10-2022 | NONE | |

For more details about this annex : see Official Journal of the European Patent Office, No. 12/82